# FASCICULE DE BREVET EUROPEEN

(11) **EP 2 644 240 B1**
(45) Date de publication et mention de la délivrance du brevet: **08.10.2014**
(21) Numéro de dépôt: 13158711.5
(22) Date de dépôt: 12.03.2013
(51) Int. Cl.: A63H 27/127, A63H 27/00

(54) **Estimateur d'altitude pour drone à voilure tournante à rotors multiples**
Flughöhenschätzgerät für Drehflügel-Drohne mit mehreren Rotoren
Altitude estimator for rotary-wing drone with multiple rotors

(30) Priorité: 30.03.2012 FR 1252888
(43) Date de publication de la demande: 02.10.2013
(73) Titulaire: Parrot, 75010 Paris (FR)
(72) Inventeur: Seydoux, Henri, 75017 PARIS (FR); Callou, François, 75012 Paris (FR); Babel, Mathieu, 75009 Paris (FR)
(74) Mandataire: Dupuis-Latour, Dominique

(56) Documents cités:
- EP-A1- 2 364 757
- EP-A1- 2 400 460
- EP-A1- 2 431 084
- WO-A2-2010/061099

## Description

L'invention concerne les drones à voilure tournante tels que les quadricoptères et analogues.

Ces drones sont pourvus de rotors multiples entrainés par des moteurs respectifs commandables de manière différenciée afin de piloter le drone en attitude et en vitesse.

Un exemple typique d'un tel drone est l*'AR.Drone* de Parrot SA, Paris, France, qui est un quadricoptère équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Les WO 2010/061099 A2 et EP 2 364 757 A1 (Parrot SA) décrivent un tel drone ainsi que son principe de pilotage par l'intermédiaire d'un téléphone ou baladeur multimedia à écran tactile et accéléromètre intégré, par exemple un téléphone cellulaire de type *iPhone* ou un baladeur ou une tablette multimedia de type *iPod Touch* ou *iPad* (marques déposées de Apple Inc., USA). Le drone est piloté par l'utilisateur au moyen de signaux émis par le détecteur d'inclinaisons de l'appareil, inclinaisons qui seront répliquées par le drone : par exemple, pour faire avancer le drone l'utilisateur incline son appareil selon son axe de tangage, et pour déporter le drone à droite ou à gauche il incline ce même appareil par rapport à son axe de roulis. De cette manière, si le drone est commandé de manière à s'incliner ou "plonger" vers le bas (inclinaison suivant un angle de tangage), il progressera vers l'avant avec une vitesse d'autant plus élevée que l'inclinaison sera importante ; inversement s'il est commandé de manière à se "cabrer" dans le sens opposé, sa vitesse ralentira progressivement puis s'inversera en repartant vers l'arrière. De la même façon, pour une commande d'inclinaison suivant un axe de roulis le drone penchera à droite ou à gauche, provoquant un déplacement linéaire en translation horizontale vers la droite ou vers la gauche.

L'utilisateur dispose d'autres commandes affichées sur l'écran tactile, notamment de "montée/descente" (commande des gaz) et de "pivotement à droite/ pivotement à gauche" (pivotement du drone autour de son axe de lacet).

Le drone est également pourvu d'une commande de passage en point fixe : lorsque l'utilisateur lâche toutes les commandes de son appareil de télécommande, le drone s'immobilise au point fixe et s'y stabilise de façon entièrement automatique.

L'invention concerne plus particulièrement l'évaluation de l'altitude à laquelle évolue le drone, et sa stabilisation verticale au cours de ses évolutions, à partir de l'altitude estimée.

Par "altitude", on entendra la valeur de la position instantanée du drone en direction verticale, considérée dans un repère terrestre fixe tel qu'un repère galiléen, dont l'altitude zéro correspondra à la position du drone au sol, au moment de son décollage. Cette "altitude" est donc une grandeur absolue.

Le drone tel que le *AR.Drone* décrit dans les documents précités est muni d'un télémètre à ultrasons (US) comportant un transducteur électro-acoustique permettant l'émission et la réception d'ultrasons. Ce transducteur émet une brève salve d'ultrasons de quelques dizaines ou centaines de microsecondes, puis attend le retour de l'écho acoustique envoyé après réflexion sur le sol. Le laps de temps séparant l'émission de la salve de la réception de l'écho permet, connaissant la vitesse du son, d'estimer la longueur du chemin acoustique parcouru et donc d'évaluer la distance séparant le drone de la surface réfléchissante. En réalité, dans la mesure où le faisceau du capteur US est relativement large (typiquement un cône de 55° d'ouverture environ), le transducteur reçoit le plus souvent une multiplicité d'échos, et discrimine parmi ces échos celui qui correspond au point le plus proche. Cette mesure est itérée à intervalles rapprochés, avec une fréquence de récurrence typique des salves d'ultrasons de 25 Hz.

Un tel estimateur d'altitude mettant en oeuvre un télémètre US est décrit par exemple dans le EP 2 400 460 A1 (Parrot SA), où il est utilisé en particulier pour calculer un facteur d'échelle à appliquer à des images successives du terrain survolé par le drone, utilisées notamment pour apprécier la vitesse horizontale de celui-ci par rapport au sol, en combinaison avec les données accélérométriques.

Le résultat fourni par un télémètre US, ci-après "distance", est en tout état de cause une grandeur relative, fonction du relief du terrain survolé par le drone. En effet, la distance mesurée peut différer de l'altitude (au sens indiqué ci-dessus), en particulier lorsque le drone vient à passer au-dessus d'un obstacle, par exemple s'il survole, à altitude constante, une table ou un mur : pendant la durée de ce survol, la distance mesurée par le télémètre US va brusquement décroitre, alors même que l'altitude n'aura pas varié.

Si l'on s'en tient uniquement aux indications du télémètre, on risque donc de faire faire au drone du "suivi de terrain", ce qui n'est pas le but recherché, notamment en terrain accidenté lorsque l'on souhaite seulement maintenir l'altitude à une valeur stable.

L'invention vise à résoudre un certain nombre de problèmes résultant de ce phénomène, ainsi que d'autres inconvénients propres aux capteurs télémétriques US.

Ces capteurs présentent les caractéristiques suivantes :
- la mesure produite n'est qu'une mesure relative de l'altitude (mesure de distance, télémétrique) ;
- en situation réelle, la mesure est très parasitée, du fait d'échos multiples renvoyés par le sol, du terrain plus ou moins réfléchissant et de fréquentes disparitions du signal par exemple lorsque le drone survole un terrain absorbant (broussailles...) ;
- la portée est limitée, environ 6 m dans le cas de l'*AR.Drone* décrit dans les documents précités, et au-delà de cette valeur le signal télémétrique disparait brusquement ;
- en revanche, la mesure est très rapide, elle peut être réitérée à fréquence élevée (typiquement 25 Hz), et sa précision est excellente, de l'ordre de quelques centimètres sur une échelle de mesure allant de quelques dizaines de centimètres à plusieurs mètres.

Pour pallier ces inconvénients, il est possible d'utiliser en combinaison avec le capteur télémétrique un autre type de capteur, à savoir un capteur de pression, ou capteur barométrique.

Un capteur barométrique permet de mesurer les variations de pression au cours du vol, variations qui sont corrélées aux variations d'altitude. On peut ainsi obtenir une mesure absolue de l'altitude par intégration de ces variations à partir d'une altitude zéro au moment du décollage.

Un capteur barométrique présente les caractéristiques suivantes :
- il fournit une mesure absolue, indépendante du terrain survolé ;
- il est utilisable en haute altitude, sans limite supérieure ;
- en revanche, il est lent et peu précis, dans la mesure où il est nécessaire d'intégrer des variations de pression ;
- par ailleurs, il est sujet aux perturbations aérodynamiques, notamment à faible altitude en raison de l'effet de sol, lorsque les rotors du drone produisent des turbulences importantes rendant inutilisable les signaux délivrés par le capteur de pression.

De fait, une simple combinaison des signaux délivrés concurremment par deux capteurs télémétrique et barométrique ne permet pas toujours d'obtenir une estimation correcte, évaluée de façon continue, de l'altitude du drone.

Or, si l'on souhaite notamment asservir le drone pour le stabiliser dans la direction de la verticale, en point fixe ou en vol piloté, il est nécessaire de disposer de façon continue et fiable d'une mesure de l'altitude, d'une manière qui ne risque pas perturber les boucles d'asservissement contrôlant la stabilisation du drone.

Ainsi, le but de l'invention est de proposer un drone comportant des moyens de détermination d'altitude pourvus d'algorithmes de validation et de réajustement éventuel de la mesure d'altitude estimée, qui permette de résoudre cette difficulté en toutes circonstances, notamment lorsque le drone évolue au-dessus d'un terrain dont la nature et les singularités sont a *priori* inconnues et imprévisibles.

L'invention propose à cet effet un drone du type général divulgué par le EP 2 400 460 A1 précité, à savoir un drone à voilure tournante à rotors multiples entrainés par des moteurs respectifs commandés par application de commandes moteur différenciées pour piloter le drone en attitude et en vitesse, ce drone comprenant des moyens de détermination d'altitude, aptes à délivrer une valeur d'altitude absolue du drone exprimée dans un repère terrestre absolu, comprenant un capteur télémétrique apte à estimer une distance relative séparant le drone d'une surface renvoyant des échos d'impulsions ultrasonores émises par le drone.

De façon caractéristique, selon l'invention, les moyens de détermination d'altitude comprennent en outre un capteur barométrique apte à délivrer un signal de variation d'altitude du drone, et un estimateur recevant en entrée les signaux délivrés par le capteur télémétrique et par le capteur barométrique et combinant ces signaux pour délivrer en sortie ladite valeur d'altitude absolue du drone. En outre, des moyens de validation du signal délivré par le capteur télémétrique analysent les échos renvoyés et, en fonction du résultat de cette analyse, modifient en conséquence les paramètres de l'estimateur et/ou autorisent ou bien inhibent l'application à l'estimateur du signal délivré par le capteur télémétrique. Enfin, des moyens de détection d'obstacle analysent les échos renvoyés et, en fonction du résultat de cette analyse, déduisent la présence et la configuration d'un obstacle dans le rayon d'action du capteur télémétrique et appliquent à l'estimateur une action correctrice apte à compenser l'effet de l'obstacle sur la distance relative estimée par le capteur télémétrique.

Très avantageusement, l'estimateur comprend un filtre prédictif incorporant une représentation d'un modèle dynamique du drone, ce filtre étant apte à opérer une prédiction de ladite valeur d'altitude absolue du drone à partir desdites commandes moteur et à recaler périodiquement cette prédiction en fonction des signaux délivrés par le capteur télémétrique et par le capteur barométrique.

Ce filtre prédictif est notamment un filtre à quatre états, comprenant : ladite valeur d'altitude absolue, comptée par rapport à une position de décollage du drone ; une composante de vitesse verticale du drone ; un biais desdites commandes moteur par rapport audit modèle dynamique du drone ; et un biais du capteur barométrique.

Selon diverses caractéristiques subsidiaires avantageuses :
- les moyens de validation comprennent des moyens d'estimation de qualité de ladite surface renvoyant les échos, en fonction du nombre d'échos reçus concurremment pour une même impulsion émise, et/ou en fonction de la dispersion entre les valeurs de distance obtenues pour une succession temporelle d'impulsions émises par le capteur télémétrique ;
- les moyens de validation comprennent des moyens de réjection des valeurs de distance estimées par le capteur télémétrique, en fonction d'une analyse de cohérence d'une pluralité de valeurs de distance obtenues pour une succession temporelle d'impulsions émises par le capteur télémétrique, et/ou en fonction de l'écart d'une valeur de distance courante par rapport à une prédiction de distance obtenue à partir d'une pluralité de valeurs de distance obtenues pour une succession temporelle d'impulsions émises par le capteur télémétrique ;
- les moyens de réjection opèrent par rapport à des seuils variables, fonction d'une estimation de qualité de la surface renvoyant les échos ;
- il est en outre prévu des moyens pour calculer une valeur de décalage d'altitude au moment où les moyens de réjection rejettent les valeurs de distance estimées, et pour ajouter cette valeur de décalage à la valeur de distance estimée lorsque les moyens de réjection ne rejettent plus les valeurs de distance estimées ;
- les moyens de détection d'obstacle comprennent des moyens pour détecter, dans les valeurs de distance obtenues pour une succession temporelle d'impulsions émises par le capteur télémétrique, deux sauts consécutifs de signe opposé avec des valeurs de distance obtenues semblables avant et après ces deux sauts, avantageusement avec des moyens pour calculer une valeur de décalage d'altitude au moment du premier saut, et pour ajouter cette valeur de décalage à la valeur de distance estimée au moment du second saut ;
- les moyens de détection d'obstacle comprennent des moyens pour détecter une oscillation, entre deux valeurs, des valeurs de distance obtenues pour une succession temporelle d'impulsions émises par le capteur télémétrique lorsque le drone est dans un état de point fixe ;
- les moyens de détection d'obstacle comprennent des moyens pour lisser les valeurs de distance successivement obtenues en présence d'une oscillation détectée ;
- les moyens de détection d'obstacle comprennent des moyens aptes à détecter une perte du signal délivré par le capteur télémétrique du fait d'une absence d'écho renvoyé, à calculer une valeur de décalage d'altitude au moment de cette perte de signal, et à appliquer cette valeur de décalage comme signal télémétrique en entrée de l'estimateur. En particulier, en cas de perte de signal télémétrique : i) si l'altitude du drone est inférieure à une altitude de seuil donnée, la valeur de décalage enregistrée est appliquée en entrée de l'estimateur si cette valeur enregistrée est présente, une valeur prédéterminée étant appliquée dans le cas contraire, et ii) si l'altitude du drone est supérieure à ladite altitude de seuil donnée, la valeur de décalage enregistrée est appliquée inchangée en entrée de l'estimateur.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une vue d'ensemble montrant le drone et l'appareil de télécommande associé permettant son pilotage à distance.
La Figure 2 est un schéma par blocs des différents organes de contrôle, d'asservissement et de pilotage assisté du drone.
La Figure 3 illustre différentes configurations de survol de terrain par le drone, à altitude constante.
La Figure 4 est un organigramme des différentes fonctions de validation des mesures du capteur US et d'application de mesures correctrices éventuelles.
La Figure 5 est un chronogramme montrant les états successifs de l'indicateur booléen représentatif de la qualité du sol en fonction du nombre d'échos reçus par le capteur US.
La Figure 6 présente deux chronogrammes illustrant les variations de la mesure brute délivrée par le capteur US, et le nombre d'échos simultanément reçus, lors du survol d'un terrain présentant des caractéristiques variables d'absorption du signal US émis.
La Figure 7 est un chronogramme montrant les états successifs de l'indicateur booléen représentatif de la cohérence des mesures délivrées par le capteur US en fonction des valeurs de ces mesures successivement acquises et prédites.
La Figure 8 illustre la mise à jour de l'offset appliqué à la mesure brute délivrée par le capteur US au passage d'un obstacle, pour éviter que le drone ne fasse du suivi de terrain lors du survol de cet obstacle.
La Figure 9 illustre un phénomène de perte d'altitude par le drone suite au passage et à l'éloignement d'un obstacle, du fait de l'inclinaison du drone lors de ce survol.
La Figure 10 est un chronogramme montrant la variation des différents signaux dans la configuration de passage d'obstacle présentée Figure 9, ainsi que les états successifs de l'indicateur booléen de rejet du signal délivré par le capteur US.
La Figure 11 est un chronogramme montrant la manière de gérer l'offset appliqué à la mesure brute délivrée par le capteur US, dans la configuration de franchissement d'obstacle des Figures 9 et 10.
La Figure 12 illustre un phénomène d'instabilité de la mesure délivrée par le capteur US du drone lorsque celui-ci survole en point fixe la frontière d'un obstacle.
La Figure 13 est un chronogramme montrant les variations de la mesure brute délivrée par le capteur US dans la configuration de point fixe en frontière d'obstacle de la Figure 12, ainsi que les états successifs de l'indicateur booléen de rejet du signal délivré par le capteur US.
La Figure 14 est un chronogramme illustrant l'application de l'algorithme de correction des mesures du capteur US dans la configuration des Figures 12 et 13.
La Figure 15 illustre le phénomène de perte du signal délivré par le capteur US du drone en cas d'augmentation subite de la distance par rapport au sol.
La Figure 16 est un chronogramme illustrant l'application de l'algorithme de correction des mesures et de recalage des valeurs estimées par la configuration de la Figure 15.

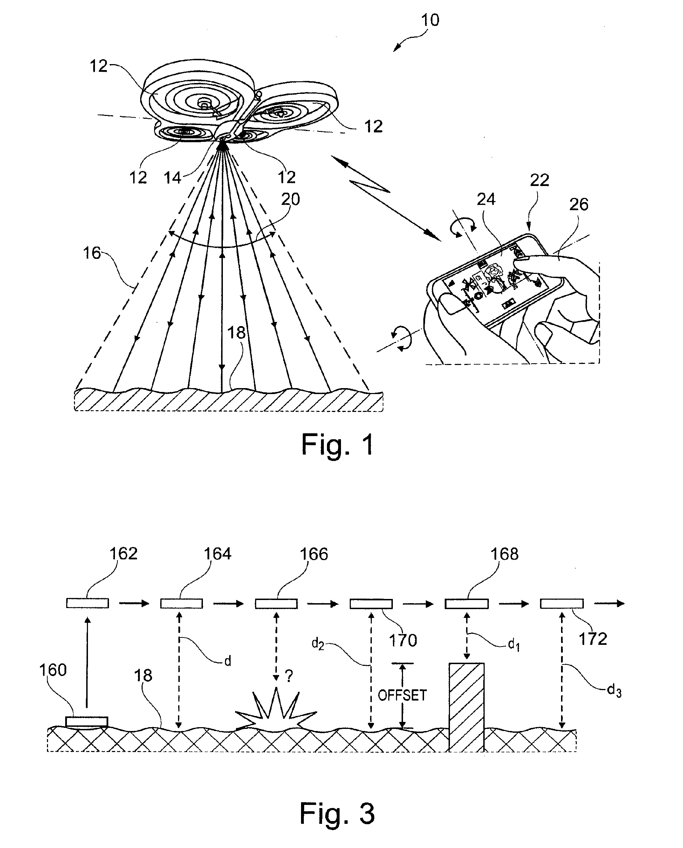

Sur la Figure 1, la référence 10 désigne de façon générale un drone, par exemple un quadricoptère tel que le *R.Drone* précité décrit dans les WO 2010/061099 A2 et EP 2 364 757 A1, ainsi que les FR 2 915 569 A1 (qui décrit notamment le système de gyromètres et accéléromètres utilisé par le drone) et EP 2 431 084 A1 (qui décrit notamment la manière de contrôler des trajectoires prédéterminées).

Le drone 10 comporte quatre rotors coplanaires 12 dont les moteurs sont pilotés indépendamment par un système intégré de navigation et de contrôle d'attitude.

Des capteurs inertiels (accéléromètres et gyromètres) permettent de mesurer avec une certaine précision les vitesses angulaires et les angles d'attitude du drone, c'est-à-dire les angles d'Euler décrivant l'inclinaison du drone par rapport à un plan horizontal d'un repère terrestre fixe.

Le drone est pourvu d'une première caméra à visée frontale permettant d'obtenir une image de la scène vers laquelle est orienté, ainsi qu'une seconde caméra à visée verticale, pointant vers le bas pour capter des images successives du terrain survolé et utilisée notamment pour évaluer la vitesse du drone par rapport au sol en combinaison avec les données accélérométriques, grâce à un logiciel qui estime le déplacement de la scène captée par la caméra d'une image à la suivante et applique à ce déplacement estimé un facteur d'échelle fonction de l'altitude mesurée. Cette technique est décrite en détail dans le EP 2 400 460 A1 précité, auquel on pourra se référer pour de plus amples détails.

Un télémètre à ultrasons disposé sous le drone et un capteur barométrique embarqué fournissent par ailleurs des mesures qui, combinées, donnent une estimation de l'altitude du drone par rapport au sol.

Plus précisément, le télémètre à ultrasons comprend un transducteur électro-acoustique 14 générant en direction du sol 18 une brève salve d'ultrasons (de quelques dizaines ou centaines de microsecondes) en un faisceau 16 approximativement conique, avec un angle d'ouverture 20 de l'ordre de 55° environ. La réflexion de ce faisceau sur le sol 18 produit des échos acoustiques qui sont reçus par le transducteur 14 et analysés de façon à estimer la longueur du chemin acoustique parcouru, en fonction du laps de temps séparant l'émission de la salve de la réception du premier écho et de la vitesse du son, et évaluer ainsi la distance séparant le drone 10 du sol 18.

Cette mesure de distance est, de façon caractéristique de l'invention, recoupée avec une mesure des variations de pression produites par les variations d'altitude du drone au cours de son évolution, de la manière que l'on exposera plus bas.

Le drone 10 est piloté par un appareil de télécommande distant 22 pourvu d'un écran tactile 24 affichant l'image embarquée par l'une des caméras du drone, avec en superposition un certain nombre de symboles permettant l'activation de commandes de pilotage par simple contact du doigt 26 d'un utilisateur sur l'écran tactile 18. L'appareil 22 est pourvu de capteurs d'inclinaison permettant de contrôler l'attitude du drone en imprimant à l'appareil des inclinaisons correspondantes. Pour l'échange bidirectionnel de données avec le drone, il est également pourvu de moyens de liaison radio, par exemple de type réseau local *Wi-Fi* (IEEE 802.11) ou *Bluetooth* (marques déposées). Comme indiqué en introduction, l'appareil de télécommande 22 est avantageusement constitué par un téléphone ou baladeur multimedia à écran tactile et accéléromètre intégré, par exemple un téléphone cellulaire de type *iPhone,* un baladeur de type *iPod Touch* ou une tablette multimedia de type *iPad,* qui sont des appareils incorporant les divers organes de contrôle nécessaires à l'affichage et à la détection des commandes de pilotage, à la visualisation de l'image captée par la caméra frontale, et à l'échange bidirectionnel de données avec le drone par liaison *Wi-Fi* ou *Bluetooth.*

Le pilotage du drone 10 consiste à faire évoluer celui-ci en commandant les moteurs de façon différenciée pour engendrer, selon le cas, des mouvements de :
a) rotation autour d'un axe de tangage, pour faire avancer ou reculer le drone ; et/ou
b) rotation autour d'un axe de roulis, pour décaler le drone vers la droite ou vers la gauche ; et/ou
c) rotation autour d'un axe de lacet, pour faire pivoter vers la droite ou vers la gauche l'axe principal du drone ; et/ou
d) translation vers le bas ou vers le haut par changement du régime des gaz, de manière à respectivement réduire ou augmenter l'altitude du drone.

Lorsque ces commandes de pilotage sont appliquées par l'utilisateur à partir de l'appareil 22 (configuration de "pilotage contrôlé", commandé par un utilisateur), les commandes a) et b) sont obtenues par des inclinaisons de l'appareil : par exemple, pour faire avancer le drone il suffit d'incliner l'appareil en le penchant vers l'avant, pour le déporter à droite il suffit d'incliner l'appareil en le penchant vers la droite, etc. Les commandes c) et d), quant à elles, résultent d'actions appliquées par contact du doigt de l'utilisateur sur des zones spécifiques correspondantes de l'écran tactile (on pourra se référer aux WO 2010/061099 A2 et EP 2 364 757 A1 précités pour plus de détails sur ces aspects du système).

Le drone possède également un système automatique et autonome de stabilisation en vol stationnaire (configuration de "point fixe", autopilotée), activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et stabilisé automatiquement, sans aucune intervention de l'utilisateur.

### Contrôle et asservissement des moteurs du drone

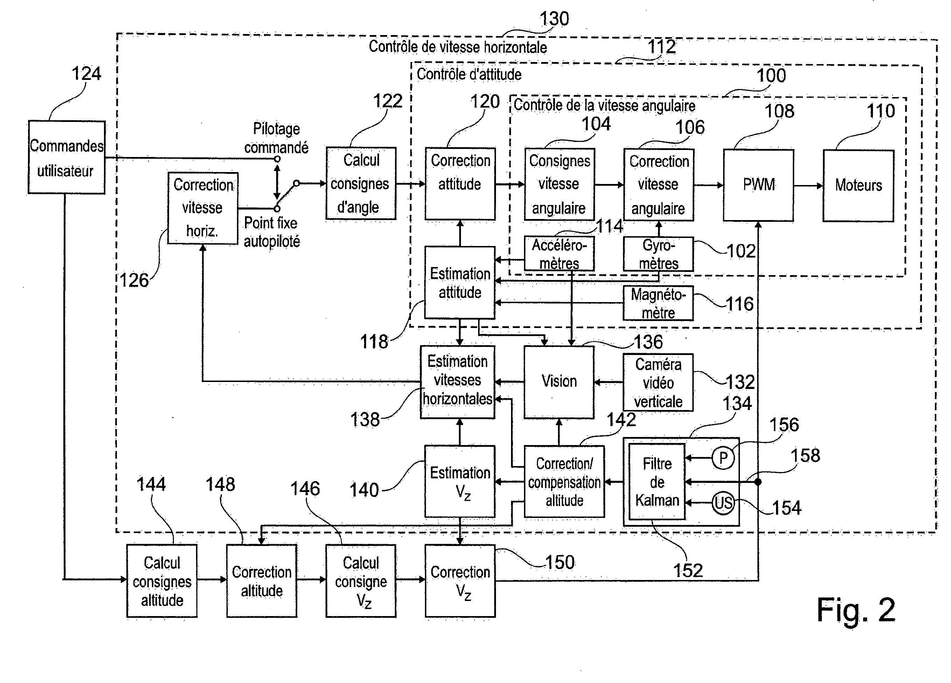

On va maintenant exposer la manière dont sont élaborées les consignes de pilotage des moteurs du drone, en référence à la Figure 2 qui est un schéma par blocs fonctionnels des différents organes de contrôle et d'asservissement du drone.

On notera que, bien que ces schémas soient présentés sous forme de circuits interconnectés, la mise en oeuvre des différentes fonctions est essentiellement logicielle, cette représentation n'étant qu'illustrative.

De façon générale, comme illustré Figure 2, le système de pilotage implique plusieurs boucles imbriquées pour le contrôle de la vitesse horizontale, de la vitesse angulaire et de l'attitude du drone, en plus des variations d'altitude.

La boucle la plus centrale, qui est la boucle 100 de contrôle de la vitesse angulaire, utilise d'une part les signaux fournis par des gyromètres 102 et d'autre part une référence constituée par des consignes de vitesse angulaire 104. Ces différentes informations sont appliquées en entrée d'un étage 106 de correction de la vitesse angulaire, qui pilote lui-même un étage 108 de contrôle des moteurs 110 afin de commander séparément le régime des différents moteurs pour corriger la vitesse angulaire du drone par l'action combinée des rotors entrainés par ces moteurs.

La boucle 100 de contrôle de la vitesse angulaire est imbriquée dans une boucle 112 de contrôle d'attitude, qui opère à partir des indications fournies par les gyromètres 102, par des accéléromètres 114 et par un magnétomètre 116 donnant l'orientation absolue du drone dans un repère géomagnétique terrestre. Les données issues de ces différents capteurs sont appliquées à un étage 118 d'estimation d'attitude de type PI (Proportionnel-Intégrateur). L'étage 118 produit une estimation de l'attitude réelle du drone, appliquée à un étage 120 de correction d'attitude qui compare l'attitude réelle à des consignes d'angle générées par un circuit 122 à partir de commandes directement appliquées par l'utilisateur 124 (configuration de "pilotage contrôlé") et/ou de données générées en interne par le pilote automatique du drone via le circuit 126 de correction de vitesse horizontale pour le maintien du drone en position immobile (configuration de "point fixe" autopiloté). Les consignes éventuellement corrigées appliquées au circuit 120 et comparées à l'attitude réelle du drone sont transmises par le circuit 120 au circuit 104 pour commander les moteurs de manière appropriée.

En résumé, à partir de l'erreur entre la consigne (appliquée par l'utilisateur et/ou générée en interne) et la mesure de l'angle (donnée par le circuit d'estimation d'attitude 118), la boucle 112 de contrôle d'attitude calcule une consigne en vitesse angulaire à l'aide du correcteur PI du circuit 120. La boucle 100 de contrôle de la vitesse angulaire calcule ensuite la différence entre la consigne de vitesse angulaire précédente et la vitesse angulaire effectivement mesurée par les gyromètres 102. La boucle calcule à partir de ces informations les différentes consignes de vitesse de rotation (et donc de force ascensionnelle), qui sont envoyées aux moteurs 110 pour réaliser la manoeuvre demandée par l'utilisateur et/ou planifiée par le pilote automatique du drone.

La boucle de contrôle de vitesse horizontale 130 utilise une caméra vidéo verticale 132 et un circuit estimateur d'altitude 134 (décrit plus en détail ci-après). Un circuit 136 assure le traitement des images produites par la caméra verticale 132, en combinaison avec les signaux de l'accéléromètre 114 et du circuit d'estimation d'attitude 118, pour estimer au moyen d'un circuit 138 les deux composantes de la vitesse horizontale du drone. Les vitesses horizontales estimées sont corrigées par l'estimation de vitesse verticale donnée par un circuit 140 et par une valeur de l'altitude obtenue à partir de l'estimateur 134 et d'un circuit 142 de correction/compensation des valeurs d'altitude dans certaines configurations de vol particulières du drone (cet aspect sera lui aussi décrit plus en détail ci-après).

En ce qui concerne les déplacements verticaux du drone, l'utilisateur 124 applique des commandes à un circuit 144 de calcul de consignes d'altitude, consignes qui sont appliquées à un circuit 146 de calcul de consigne de vitesse ascensionnelle V_{z} via le circuit de correction d'altitude 148 recevant l'estimation d'altitude donnée par le circuit 142. La vitesse ascensionnelle V_{z} calculée est appliquée à un circuit 150 qui compare cette vitesse de consigne à la vitesse correspondante estimée par le circuit 140 et modifie en conséquence les données de commande des moteurs (circuit 108) de manière à augmenter ou réduire la vitesse de rotation simultanément sur tous les moteurs de façon à minimiser l'écart entre vitesse ascensionnelle de consigne et vitesse ascensionnelle mesurée.

### Estimation de l'altitude du drone

L'invention concerne plus précisément la manière dont opèrent le circuit 134 d'estimation d'altitude et le circuit 142 de correction/compensation de la valeur d'altitude estimée.

On décrira tout d'abord la manière dont opère le circuit d'estimation d'altitude 134.

Ce circuit met en oeuvre un estimateur d'état de type "filtre de Kalman", qui est un filtre à réponse impulsionnelle infinie qui estime les états d'un système dynamique (le drone dans le cas présent) à partir d'une série de mesures appliquées en entrée. On trouvera les principes généraux de cette technique par exemple dans R.E. Kalman, A new Approach to Linear Filtering and Prediction Problems, Transactions of the ASME - Journal of Basic Engineering, Vol. 82 (1960).

Dans le cas présent, le filtre de Kalman reçoit en entrée :
- le signal délivré par le capteur US 154,
- le signal délivré par le capteur barométrique 156, et
- en 158, la consigne (ci-après "consigne PWM") de vitesse ascensionnelle produite par le circuit 150 de correction de vitesse verticale Vz et appliquée au moteur du drone (circuit 108) : la consigne PWM représente la force de poussée verticale résultant du contrôle simultané des quatre moteurs du drone.

Le système dynamique du filtre de Kalman est constitué par un ensemble d'équations qui décrit le comportement du drone. Une telle modélisation est décrite notamment dans le EP 2 431 084 A1, auquel on pourra se référer pou de plus amples détails.

Le filtre de Kalman 152 opère en deux phases, avec successivement :
- une phase de prédiction, effectuée à chaque itération du filtre : cette phase consiste à prédire l'altitude du drone à l'instant courant à l'aide d'une part de la consigne PWM et d'autre part de la modélisation dynamique du drone ;
- une phase de recalage, qui consiste à corriger la prédiction en utilisant les mesures courantes délivrées par les capteurs US 154 et barométrique 156. Cette étape n'est pas nécessairement réalisée à chaque itération car, comme on le verra plus bas, les mesures du capteur US ne sont pas forcément disponibles tout le temps.

Le filtre de Kalman utilise et estime quatre états, à savoir :
- l'altitude du drone par rapport à son point de départ (position à l'instant du décollage),
- la vitesse verticale Vz,
- le biais de la consigne PWM, et
- le biais de la mesure de pression délivrée par le capteur barométrique 156.

L'état correspondant au biais de la consigne PWM représente l'erreur du modèle de poussée du drone : le modèle de poussée peut en effet varier en fonction de différents paramètres tels que le poids du drone, l'efficacité aérodynamique des hélices (cette efficacité dépendant de l'état des hélices et de la pression de l'air), etc. L'état de biais de la consigne PWM sert à recaler en vol le modèle à l'aide des mesures fournies par les deux capteurs, ce qui permet notamment d'être plus précis lorsque ces mesures disparaissent.

L'état de biais de la mesure de pression permet, quant à lui, de corriger les dérives du capteur barométrique. Celles-ci apparaissent principalement au décollage, à la mise en route des moteurs et au cours des premières secondes de vol avec la montée en température. Ces dérives peuvent également apparaitre lorsque l'environnement de pression est modifié dans d'autres circonstances, par exemple lorsque le drone évolue à l'intérieur d'une pièce et qu'une personne ouvre une fenêtre de cette pièce, etc. Cet état de biais de la mesure de pression est estimé à partir des mesures du capteur US 15. Lorsque la mesure US n'est plus disponible, par exemple lorsque le drone prend de l'altitude au-delà de la portée du capteur US, ou ne reçoit plus d'écho pour une autre raison (sol trop absorbant) l'état de biais de la mesure de pression n'est plus estimé, il est maintenu à une valeur constante.

Pour recaler les états du filtre, celui-ci utilise trois observations :
- la mesure de distance, donnée par le capteur US 154, éventuellement corrigée d'une valeur dite d'*offset* au passage d'un obstacle (cet aspect sera développé en détail plus bas). On notera que cette observation n'est pas disponible en permanence : dans des conditions optimales, sur un sol lisse et à basse altitude, la mesure est fournie à une fréquence de récurrence de 25 Hz, soit 1 fois sur 8 par rapport à la fréquence de recalcul des données de pilotage du drone, qui est typiquement de 200 Hz. D'autre part, la mesure disparait dès que l'altitude dépasse le rayon d'action du télémètre à ultrasons, typiquement au-delà de 6 m, et elle peut en outre être rejetée régulièrement lors de passages d'obstacles ou sur un sol chaotique (on décrira plus bas en détail cet aspect, notamment la manière dont sont prises les décisions de rejet ou non de la mesure délivrée par le capteur US) ;
- la mesure de pression, donnée par le capteur barométrique 156, corrigée de son offset propre. Cette mesure est généralement présente à chaque itération, elle est toutefois désactivée lorsque le drone est très près du sol, typiquement à moins de 20 cm du sol, compte tenu des effets de souffle perturbateurs qui parasitent fortement la mesure de pression ; et
- la mesure d'altitude zéro, qui n'est utilisée que lorsque le drone n'est pas en vol ; il s'agit d'une mesure virtuelle qui permet de s'assurer que la valeur d'altitude délivrée aux circuits de navigation reste fixée à zéro.

### Validation des données délivrées par le télémètre à ultrasons

Cet aspect de la gestion du signal délivré par le capteur télémétrique US a pour but i) de décider si, à un instant donné, la mesure US est présente et si elle est exploitable, et ii) le cas échéant de mettre à jour la valeur d'offset lors du passage d'un obstacle.

Les caractéristiques de la mesure US étant fortement liées à la nature plus ou moins réfléchissante du sol, et étant en outre très différentes selon que le drone est en point fixe ou en déplacement horizontal, plusieurs algorithmes sont utilisés pour gérer les différents cas de figure susceptibles d'être rencontrés.

La Figure 3 illustre ces différentes configurations de survol du terrain par le drone.

Initialement, le drone est posé au sol et immobile (position 160) ; la valeur d'altitude est alors forcée à zéro.

Le drone s'élève ensuite au-dessus du sol (position 162), puis exécute un mouvement de déplacement horizontal, à altitude constante (positions 164 à 172).

Le capteur US ne donne pas une indication de la valeur absolue de l'altitude, il donne seulement une représentation de la distance d séparant le drone du sol 18.

Dans le cas d'un sol horizontal, régulier et bien réfléchissant, cette distance peut être évaluée sans ambigüité. En revanche, lorsque le drone survole par exemple en 166 un sol peu réfléchissant (broussailles, etc.) les échos renvoyés sont soit inexistants soit erratiques, conduisant à une mesure fortement bruitée.

Un autre aspect est le passage d'un obstacle, par exemple le survol d'un mur en extérieur ou d'une table en intérieur, comme illustré en 168 sur la

Figure 3 : si l'obstacle est réfléchissant, le télémètre va mesurer une distance *d₁* (position 168) très inférieure à celles *d₂* et *d₃* mesurées avant et après le survol de l'obstacle (positions 170 et 172), alors même que le drone évolue à altitude (absolue) constante. Le franchissement de l'obstacle, révélé par une brusque diminution du signal du capteur US, devra donc être compensé par un décalage ou "offset" appliqué à la mesure US pendant le franchissement de l'obstacle.

Ainsi, il est nécessaire :
- d'évaluer la qualité du signal reçu pour valider ou invalider la mesure délivrée par le capteur US
- et, si cette mesure est validée, de gérer l'offset qui doit lui être éventuellement ajouté.

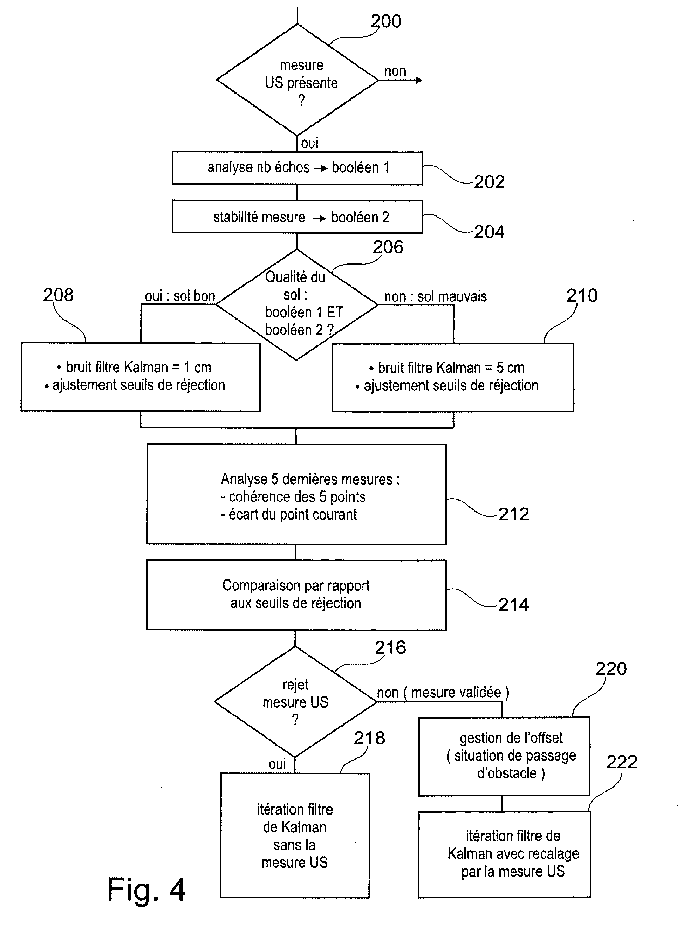

Ces fonctions de validation des mesures et d'application de corrections éventuelles sont illustrées sur l'organigramme de la Figure 4.

L'analyse du signal US est bien entendu opérée seulement si le capteur délivre un signal (test 200), c'est-à-dire : i) 1 cycle sur 8 cycles de recalcul des données, et ii) si au moins un écho est détecté dans la fenêtre temporelle correspondant à la portée du capteur US.

Il convient alors d'estimer la qualité du sol survolé par le drone (blocs 202 et 204), plus précisément la qualité de réflexion des échos émis par le transducteur US, réflexion qui est très bonne sur un sol lisse, mais très parasitée sur un sol plus diffus.

Pour tenir compte de ces variations, le paramétrage du bruit de mesure du filtre de Kalman sera adapté en fonction d'un indicateur booléen bon/mauvais de la qualité du sol (test 206) : par exemple le niveau de bruit du filtre sera ajusté à 5 cm (bloc 208) sur un sol net, de bonne qualité, tandis qu'il sera ajusté à 15 cm (bloc 210) sur un sol de mauvaise qualité réfléchissante. De ce fait, sur un sol net le filtre ajustera de façon précise l'altitude estimée sur la mesure de distance fournie par le télémètre US, tandis qu'il lui fera moins confiance, et donc filtrera plus efficacement le bruit sur un sol de qualité médiocre.

Ce booléen bon/mauvais de qualité du sol servira également à modifier les seuils de réjection pour la validation ou l'invalidation ultérieure de la mesure, et servira également à la gestion de l'offset - ces aspects seront décrits plus bas.

L'estimation globale de la qualité du sol prévoit la fusion de deux indicateurs booléens spécifiques, l'un résultant de l'analyse du nombre d'échos (bloc 202), l'autre du caractère plus ou moins stable des mesures successivement produites par le télémètre US (bloc 204). Le sol sera déclaré bon (test 206) si les deux booléens correspondent à un sol bon ; il sera déclaré mauvais dans le cas contraire, c'est-à-dire si au moins l'un des deux booléens considère le sol comme mauvais.

Plus précisément, le *premier critère d'évaluation de la qualité du sol* (bloc 202) consiste à évaluer la nature du sol en fonction du nombre d'échos réfléchis et captés par le transducteur.

Concrètement, la mesure de distance du capteur télémétrique US correspond au temps de retour du premier écho. Mais de nombreux autres échos sont également reçus et enregistrés par le transducteur, et le nombre d'échos reçus peut constituer une estimation de la qualité du sol : par exemple sur un sol net généralement un ou deux échos seulement sont reçus, tandis que sur un sol chaotique (buissons ou obstacles), le nombre d'échos peut s'élever jusqu'à six ou sept.

Cette mesure du nombre d'échos étant relativement bruitée, celle-ci est d'abord filtrée à l'aide d'un filtre récursif du premier ordre. L'algorithme applique ensuite un seuillage par hystérésis (avec par exemple un seuil haut à 3 échos et un seuil bas à 2 échos) pour obtenir le premier booléen indicateur de sol.

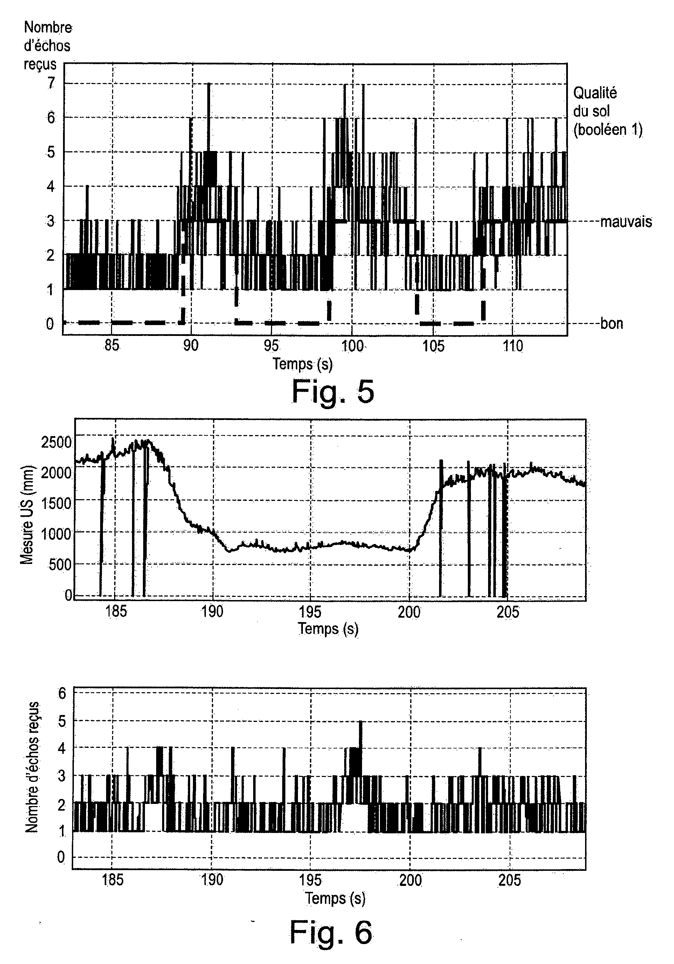

La Figure 5 illustre le résultat ainsi obtenu lors d'un exemple de vol dans une configuration où le drone survole alternativement un sol lisse et des buissons.

Le *second critère d'évaluation de la qualité du sol* (bloc 204) est basé sur la stabilité des mesures successives de distance délivrées par le capteur US.

En effet, dans certains cas, le nombre d'échos n'est pas suffisant pour statuer sur la qualité du sol.

Ainsi, sur la Figure 6 on a illustré un exemple montrant les variations simultanées de la mesure brute délivrée par le capteur US et du nombre d'échos reçus, lors du survol d'un terrain présentant des caractéristiques variables d'absorption du signal US émis. On constate que la mesure donnée par le capteur US est très bruitée, signe d'un sol de mauvaise qualité réfléchissante, alors même que le nombre d'échos reste faible et ne suffit pas à déclarer le sol "mauvais" sur la base du seul premier booléen (fonction du nombre d'échos reçus).

Pour tenir compte de ce cas de figure, un second booléen de qualité de sol est calculé, en observant la dispersion de la mesure : à chaque nouvelle mesure délivrée par le capteur US, l'algorithme calcule la différence (en valeur absolue) par rapport à la mesure précédente. Cette valeur est ensuite filtrée par un filtre passe-bas (le même que pour le filtrage du nombre d'échos), puis seuillée. Une valeur par exemple supérieure à 40 mm conduira à donner la valeur "mauvais" au second booléen. Cette valeur de 40 mm est choisie pour correspondre, avec une récurrence des mesures de 25 Hz, à une vitesse verticale de 8 m/s, vitesse jamais atteinte par le drone, ce qui minimise l'incidence du biais qui pourrait apparaitre lorsque le drone a une vitesse verticale non nulle.

En pratique, afin que le passage d'un obstacle ne déclenche pas le test, seules sont retenues les dispersions par exemple inférieures à 50 cm ; une dispersion supérieure sera considérée comme résultant d'un saut d'obstacle et non comme une dispersion révélatrice d'un sol de mauvaise qualité.

Après avoir évalué la qualité du sol, l'algorithme décide si la mesure délivrée par le capteur US doit être validée ou bien rejetée.

On va décrire un test de validation (étapes 212 à 216 sur la Figure 4) permettant de répondre aux impératifs suivants :
- utiliser uniquement la mesure produite par le capteur US et non la prédiction du filtre, afin de gagner en robustesse et de ne pas rejeter la mesure US dans les cas où celle-ci est bonne et le modèle du filtre est en défaut (par exemple dans une configuration avec un vent latéral) ;
- présenter sur plusieurs itérations un effet mémoire : en effet, dans des cas où la détection est très perturbée (buissons, etc.), une simple détection d'un saut dans la valeur délivrée par le capteur n'est pas suffisante, car elle peut conduire à accepter cette valeur trop rapidement alors que la mesure n'est pas stable, de sorte qu'il est préférable de vérifier la cohérence de la mesure sur un nombre plus important de points ;
- ne pas être sensible à la vitesse verticale du drone : pour rejeter rapidement toute perturbation, il est en effet nécessaire de disposer de seuils assez rigoureux sur la grandeur mesurée, qui doit être indépendante de la vitesse verticale pour éviter tout risque de rejet de la mesure dans les phases de montée et de descente du drone.

Le test de cohérence de la mesure prévoit (bloc 212 sur la Figure 4) d'entretenir un historique des cinq dernières mesures du capteur US et de réaliser sur celles-ci une régression linéaire.

La cohérence des cinq points entre eux est alors calculée par exemple en sommant les écarts de chaque point par rapport à la droite de régression calculée sur la base des cinq mesures antérieures. Si les cinq points enregistrés dans l'historique ne sont pas cohérents entre eux (trop grande dispersion) ou si la mesure courante (mesure du capteur US) est trop éloignée de la mesure prédite par le calcul de régression, alors la mesure courante sera rejetée.

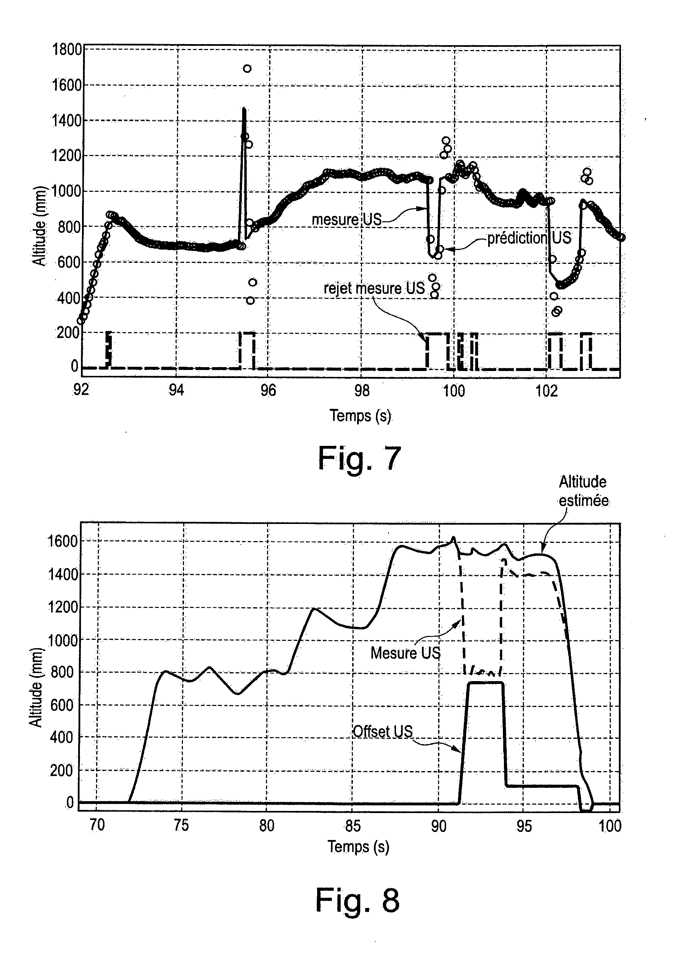

La Figure 7 illustre un exemple montrant sur le même diagramme la mesure US délivrée par le capteur, l'altitude prédite par le calcul de régression et le résultat validation/rejet de la mesure US.

On constate que dans les phases de montée comme dans les premières secondes, les mesures US ne sont pas rejetées : ceci vient du fait que la régression prend en compte la vitesse verticale (augmentation de l'altitude). En revanche, il y a bien rejet de la mesure lors d'un passage d'un obstacle (aux alentours de t = 99-100 s et 102-103 s), et acceptation à nouveau de la mesure après qu'ait été constaté un retour à cinq échantillons successifs cohérents.

Ce test de cohérence compare (bloc 214) i) la cohérence des cinq mesures enregistrées, et ii) l'écart du point courant par rapport à la prédiction, par rapport à deux seuils respectifs. Avantageusement, ces deux seuils ne sont pas constants et varient en fonction de deux paramètres, à savoir l'indicateur de qualité du sol (déterminée précédemment, de la manière indiquée) et la vitesse de déplacement du drone. Ainsi :
- sur un sol net, les deux seuils sont fixés à une valeur moyenne procurant un bon rejet des perturbations tout en assurant un faible risque de fausse détection d'obstacle : par exemple des valeurs respectives de 50 mm (cohérence des cinq points) et 20 mm (écart du point courant) ;
- sur un sol perturbé avec le drone en point fixe ou avec une faible vitesse de translation (inférieure à 300 mm/s), la mesure ultrasons est plus bruitée, du fait de la nature du sol : le réglage du filtre de Kalman est adapté en conséquence pour éviter un taux de rejet trop important, et les seuils ci-dessus sont fixés respectivement à 100 mm et 50 mm ;
- sur un sol perturbé avec le drone en mouvement (vitesse de translation supérieure à 300 mm/s), la mesure US est très susceptible de sauter d'un écho à l'autre, et l'indice de confiance est faible. I il est donc nécessaire de la rejeter au moindre doute, et pour cela le seuil sur le point courant est choisi très bas : les seuils respectifs sont alors par exemple fixés à 100 mm et 10 mm.

À la suite de ces différents tests, la mesure US est finalement rejetée ou validée (test 216 sur la Figure 4).

En cas de rejet (bloc 218), le filtre de Kalman n'utilise pas la mesure US courante, et établit sa prédiction uniquement à partir des consignes de pilotage des moteurs (entrée 158 sur la Figure 2) et du signal délivré par le capteur barométrique (156 sur la Figure 2).

Dans le cas contraire (mesure validée), si la mesure US retourne à un état valide après avoir été rejetée, elle est potentiellement décalée d'un offset si le rejet antérieur était le résultat du passage au-dessus d'un obstacle. Cette situation est gérée au bloc 220 de la Figure 4.

En tout état de cause, si la mesure est validée le filtre de Kalman utilise (bloc 222) la mesure délivrée par le capteur US (entrée 154 sur la Figure 2).

Un exemple de ce cas est illustré Figure 8. Le passage d'un obstacle correspond à l'anomalie détectée à t = 91-94 s. Au moment de l'arrivée sur l'obstacle (vers t = 91 s), l'offset est utilisé pour garder une estimation d'altitude sensiblement constante. Après le franchissement de l'obstacle (vers t = 94 s), l'offset est recalculé à partir de la première mesure US considérée comme valide après rejet des mesures précédentes. Ceci permet d'éviter que le drone ne fasse du suivi de terrain, notamment si après l'obstacle le sol n'est pas au même niveau qu'avant l'obstacle.

### Correction/compensation des données en présence d'obstacles

Dans diverses circonstances, la mesure télémétrique de distance par le capteur US peut être perturbée par des obstacles.

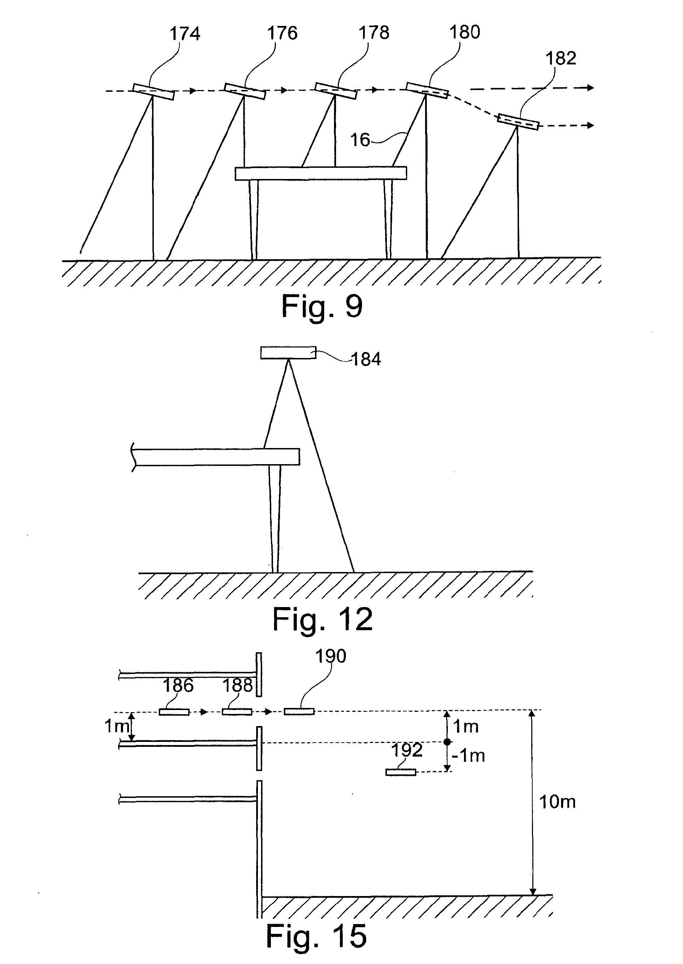

Un *premier phénomène* est illustré schématiquement sur la Figure 9, où l'on voit que le drone en progression horizontale (positions successives 174 à 180) a tendance à perdre de l'altitude juste après le franchissement de l'obstacle (position 180). Ce phénomène est dû au fait que même après que le drone a dépassé l'obstacle (positions 180 et 182), le faisceau 16 reste orienté vers ce dernier car le drone est légèrement incliné vers l'avant (pour pouvoir lui imprimer une vitesse horizontale). De ce fait, le télémètre voit l'obstacle s'éloigner et convertit en vitesse verticale une partie de la vitesse horizontale : l'estimateur va alors, à tort, estimer que le drone monte et appliquer un offset de compensation qui, en réalité, entrainera une perte d'altitude du drone (position 182).

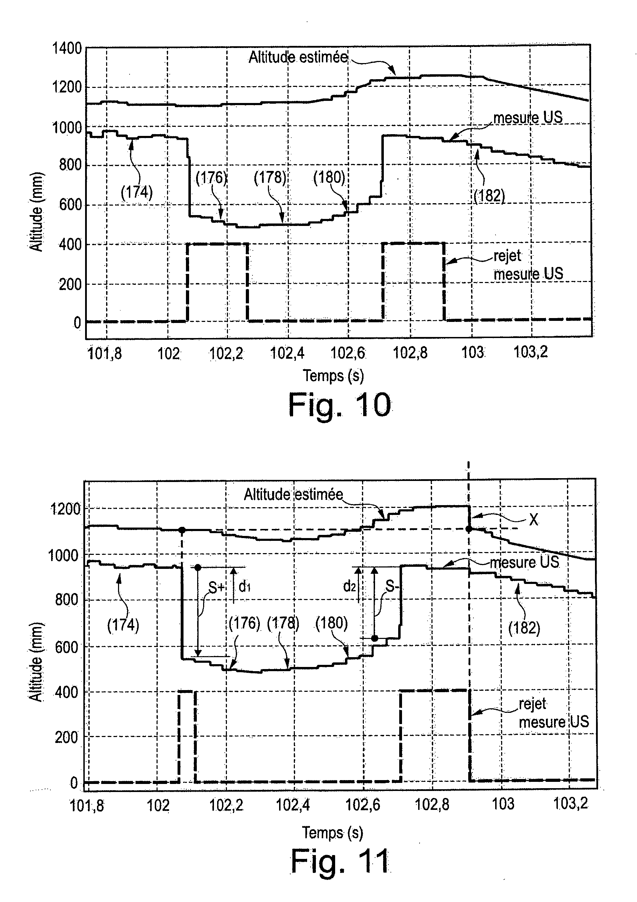

La Figure 10 montre la variation des différents signaux (mesure délivrée par le télémètre US, altitude délivrée par l'estimateur et booléen de rejet de la mesure US) avant, pendant et après le survol de l'obstacle dans la configuration de la Figure 9 :
- lorsque le drone aborde l'obstacle (position 176 de la Figure 9), la mesure US présente une diminution, mais celle-ci est sans conséquence, car elle correspond à une période où la mesure US est rejetée ;
- en revanche, juste après le franchissement de l'obstacle (position 180), la mesure n'est plus rejetée et l'augmentation virtuelle d'altitude, d'environ 15 cm, due à l'inclinaison du drone conduit l'estimateur à appliquer une mesure correctrice par recalcul de l'offset pour compenser cette (supposée) montée en modifiant les consignes de manière à descendre de 15 cm.

Pour pallier ce phénomène et éviter au drone de constamment perdre de l'altitude, l'invention propose d'appliquer un algorithme de gestion des sauts d'obstacles et de gestion de l'offset, dont les effets sont illustrés par les chronogrammes de la Figure 11 (qui sont homologues de ceux de la Figure 10, mais avec application de l'algorithme de gestion selon l'invention).

Cet algorithme est activé lorsque le drone détecte le survol et la fin du franchissement d'un obstacle, lorsque deux conditions sont remplies :
- présence sur la mesure du capteur US de deux sauts consécutifs de signe opposé (S+ et S- sur la Figure 11), et
- délivrance par le capteur US de valeurs de distance sensiblement égales (à un seuil prédéterminé près) au moment du premier saut et au moment du second saut (*d₁* et *d₂* sur la Figure 11).

Si ces conditions sont remplies, on considère i) qu'un obstacle a été survolé et franchi, et ii) que le niveau du sol après l'obstacle est sensiblement le même que celui avant l'obstacle.

Dans un tel cas, on ne recalcule plus l'offset, mais on le force à prendre la valeur qu'il avait avant franchissement de l'obstacle. L'effet de cette correction est visible sur la Figure 11 en X sur l'altitude estimée, où l'on voit qu'après franchissement de l'obstacle l'estimation d'altitude reprend sensiblement le niveau qu'elle avait avant l'approche et le franchissement de l'obstacle. En d'autres termes, au moment de la sortie d'obstacle, bien que l'erreur précédemment constatée sur la mesure de 15 cm soit présente, cette erreur est corrigée après coup, lorsque la mesure du capteur US n'est plus rejetée. La différence entre la mesure du capteur US et l'estimation d'altitude est ainsi identique avant et après l'obstacle, et le phénomène de perte d'altitude est éliminé.

Par précaution, cet algorithme de détection et de compensation n'est activé que lorsque la qualité de sol est considérée comme bonne, en raison des trop grandes variations de la mesure du capteur US constatées au passage d'un obstacle de mauvaise qualité réfléchissante.

Un *deuxième phénomène* produit par un obstacle survient lorsque le drone est en point fixe à la frontière d'un obstacle.

Cette situation est illustrée en 184 sur la Figure 12.

Lorsque le drone est en point fixe à la frontière d'un obstacle net, par exemple un bord de table, la mesure fournie par le capteur US est très instable et saute en permanence entre deux valeurs, à savoir la distance du drone à la table et la distance du drone au sol.

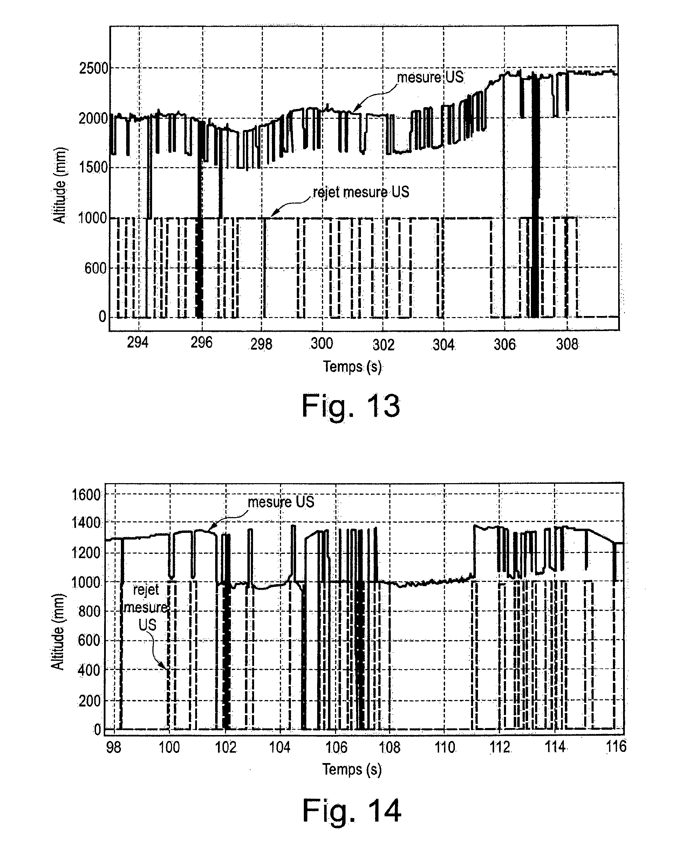

La Figure 13 montre ces variations de la mesure brute, ainsi que les états successifs de l'indicateur booléen de rejet du signal US.

Le test de cohérence exposé plus haut, qui nécessite au moins cinq mesures successives conformes pour valider la mesure donnée par le capteur US, provoque dans un tel cas de très fréquents rejets, de sorte que le drone ne maintient pas correctement son altitude en point fixe : en effet, l'évaluation de l'altitude repose dans ce cas essentiellement sur le capteur de pression, mais la précision de celui-ci n'est pas suffisante pour assurer une stabilisation convenable en point fixe.

Il est cependant dommage de rejeter la mesure US dans une telle situation car, hormis les sauts, la mesure est très stable et il est très aisé de voir les variations d'altitude du drone, de l'ordre de 50 cm sur la Figure 13, correspondant à la performance du capteur de pression.

Pour pallier ce deuxième phénomène, un algorithme spécifique est activé lorsque le drone est en point fixe (cette condition de vol étant connue et correspondant à un état "autopiloté" du drone).

On définit un saut comme une différence sur la mesure du capteur US par exemple de 50 cm au moins. Lorsqu'un tel saut est détecté, la valeur de ce saut est retranchée des mesures suivantes enregistrées dans l'historique des cinq dernières mesures.

L'historique ne contient donc plus les mesures brutes, mais les mesures lissées après élimination des sauts. Si, abstraction faite des sauts, la mesure est stable, ceci produit une courbe relativement uniforme qui ne déclenche pas le rejet de la mesure par l'algorithme de vérification de cohérence. En revanche, dans le cas d'un sol de mauvaise qualité, la mesure du capteur US est bruitée et contient des variations à toutes les fréquences. Dans ce cas, même après suppression des sauts, le résultat reste bruité et l'algorithme de vérification de cohérence continue à opérer de façon appropriée, pour ne valider que les mesures conformes.

Le résultat obtenu est illustré Figure 14 : en cas de saut, seule la première mesure est rejetée, et il n'est plus nécessaire d'attendre cinq mesures ultérieures pour retrouver une validation de la mesure US. De plus, l'utilisation de l'algorithme de gestion des sauts d'obstacle assure que la référence absolue du sol n'est pas perdue : l'offset du signal US oscille entre deux valeurs mais ne diverge pas, et le drone maintient correctement son altitude : sur la Figure 14, on observe ainsi une variation d'altitude très faible, ne dépassant pas 10 cm environ entre le début et la fin du chronogramme.

Un *troisième phénomène* susceptible de perturber le fonctionnement du capteur US est celui résultant d'une perte de toute mesure délivrée par ce capteur, du fait de la disparition subite de tout écho.

Un exemple de ce phénomène est illustré Figure 15 : le drone évolue dans une pièce à relativement faible altitude, par exemple 1 m du plancher (positions 186 et 188), puis traverse une fenêtre (position 190). Si la pièce était en étage, il se retrouve alors à une altitude beaucoup plus élevée, par exemple à 10 m du sol. Dans ce cas, la valeur d'altitude délivrée par l'estimateur continue d'être intégrée grâce au capteur de pression, mais l'offset n'est plus mis à jour. Or cet offset est important car, par différence avec l'altitude du drone, il permet de calculer la distance au sol, qui est un paramètre important notamment pour les algorithmes de vision servant à analyser l'image de la caméra verticale servant à évaluer la vitesse horizontale du drone.

Lorsque la mesure US est perdue, la distance au sol renvoyée au calculateur du drone est l'altitude estimée, corrigée du dernier offset calculé. Dans le cas illustré Figure 15, après traversée de la fenêtre (position 190) cette distance au sol sera toujours considérée comme égale à 1 m, de sorte que si le drone descend par exemple de 2 m (position 192), la distance au sol après application de l'offset sera de -1 m, valeur incohérente. Pour pallier ce phénomène, l'invention propose un algorithme spécifique de gestion de l'offset exécuté lorsque le drone est en haute altitude (la "haute altitude" étant une altitude supérieure au rayon d'action des capteurs télémétriques US, typiquement une altitude supérieure à 6 m). Lorsque la mesure du capteur US a disparu pendant une durée supérieure à par exemple 2 s, ceci signifie que le drone est loin du sol, et la valeur de la distance au sol est évaluée à partir de l'offset mémorisé :
- si cette distance est supérieure à 6 m, le fonctionnement n'est pas modifié et la valeur de l'offset est enregistrée ;
- si elle est inférieure à 6 m, ceci signifie qu'elle n'est pas correcte et que le drone est probablement passé au-dessus d'un vide (franchissement d'une fenêtre, passage au-dessus d'un trou, etc.).

Dans ce dernier cas, la valeur de l'offset doit être modifiée :
- s'il existe une valeur d'offset enregistrée qui convient, celle-ci est reprise et utilisée ;
- dans le cas contraire, la distance au sol est fixée à une valeur arbitraire, par exemple 6 m.

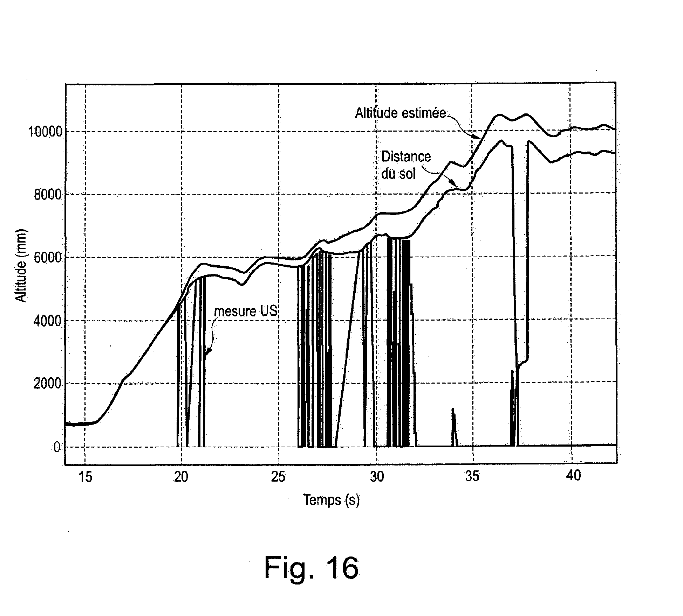

La Figure 16 illustre les résultats obtenus lors d'un vol du drone dans une cour d'immeuble.

Au départ, le drone décolle du sol. Pendant la phase ascensionnelle (t = 15 s à t = 20 s), la distance au sol reste dans le rayon d'action du capteur télémétrique US et l'altitude est donc convenablement évaluée par l'estimateur, avec correction de l'offset obtenu par analyse du signal du capteur US.

À partir de t = 20 s, l'altitude du drone approche des limites de portée du capteur US et l'on observe des pertes du signal US, qui vont en se répétant, jusqu'à une perte totale du signal, à t > 32 s. Après t = 33 s, comme l'altitude est supérieure à 4 m, la dernière valeur d'offset enregistrée à ce moment-là est conservée et mémorisée.

Vers t = 37 s, le drone se rapproche d'un mur, ce qui produit le retour de quelques échos, qui disparaissent ensuite lorsque le drone s'éloigne de ce mur. Après la réapparition/disparition du signal US du fait de l'accrochage du mur, l'offset précédemment mémorisé est appliqué, ce qui permet de garder une valeur de distance au sol sensiblement constante malgré le creux subit que présente la mesure de cette valeur lors de cet accrochage.

On notera que dans l'exemple de la Figure 16 la distance au sol a pu être estimée en début de vol, ce qui lui permet d'être restaurée après accrochage de la fenêtre. Dans l'exemple de la Figure 15 avec décollage directement à partir d'une fenêtre, il n'y aurait pas eu d'offset mémorisé et la distance au sol aurait été arbitrairement fixée à 6 m.

## Revendications

1. Un drone (10) à voilure tournante à rotors multiples (12) entrainés par des moteurs respectifs (110) commandés par application de commandes moteur différenciées (158) pour piloter le drone en attitude et en vitesse, ce drone comportant des moyens de détermination d'altitude (134), aptes à délivrer une valeur d'altitude absolue du drone exprimée dans un repère terrestre absolu, comprenant :
- un capteur télémétrique (154), apte à estimer une distance relative séparant le drone d'une surface (18) renvoyant des échos d'impulsions ultrasonores émises par le drone,
**caractérisé en ce que** les moyens de détermination d'altitude (134) comprennent en outre :
- un capteur barométrique (156), apte à délivrer un signal de variation d'altitude du drone ;
- un estimateur (152), recevant en entrée les signaux délivrés par le capteur télémétrique et par le capteur barométrique et combinant ces signaux pour délivrer en sortie ladite valeur d'altitude absolue du drone ;
- des moyens de validation du signal délivré par le capteur télémétrique, aptes à analyser les échos renvoyés et, en fonction du résultat de cette analyse, modifier en conséquence les paramètres de l'estimateur et/ou autoriser ou bien inhiber l'application à l'estimateur du signal délivré par le capteur télémétrique ; et
- des moyens de détection d'obstacle, aptes à analyser les échos renvoyés et, en fonction du résultat de cette analyse, à déduire la présence et la configuration d'un obstacle dans le rayon d'action du capteur télémétrique et appliquer à l'estimateur une action correctrice apte à compenser l'effet de l'obstacle sur la distance relative estimée par le capteur télémétrique.

2. Le drone de la revendication 1, dans lequel l'estimateur comprend un filtre prédictif (152) incorporant une représentation d'un modèle dynamique du drone, ce filtre étant apte à opérer une prédiction de ladite valeur d'altitude absolue du drone à partir desdites commandes moteur (158) et à recaler périodiquement cette prédiction en fonction des signaux délivrés par le capteur télémétrique (154) et par le capteur barométrique (156).

3. Le drone de la revendication 2, dans lequel le filtre prédictif est un filtre à quatre états, comprenant : ladite valeur d'altitude absolue, comptée par rapport à une position de décollage du drone ; une composante de vitesse verticale du drone ; un biais desdites commandes moteur par rapport audit modèle dynamique du drone ; et un biais du capteur barométrique.

4. Le drone de la revendication 1, dans lequel les moyens de validation comprennent des moyens d'estimation de qualité de ladite surface renvoyant les échos, en fonction du nombre d'échos reçus concurremment pour une même impulsion émise.

5. Le drone de la revendication 1, dans lequel les moyens de validation comprennent des moyens d'estimation de qualité de ladite surface renvoyant les échos, en fonction de la dispersion entre les valeurs de distance obtenues pour une succession temporelle d'impulsions émises par le capteur télémétrique.

6. Le drone de la revendication 1, dans lequel les moyens de validation comprennent des moyens de réjection des valeurs de distance estimées par le capteur télémétrique, en fonction d'une analyse de cohérence d'une pluralité de valeurs de distance obtenues pour une succession temporelle d'impulsions émises par le capteur télémétrique.

7. Le drone de la revendication 1, dans lequel les moyens de validation comprennent des moyens de réjection des valeurs de distance estimées par le capteur télémétrique, en fonction de l'écart d'une valeur de distance courante par rapport à une prédiction de distance obtenue à partir d'une pluralité de valeurs de distance obtenues pour une succession temporelle d'impulsions émises par le capteur télémétrique.

8. Le drone de la revendication 6 ou 7, dans lequel les moyens de réjection opèrent par rapport à des seuils variables, fonction d'une estimation de qualité de la surface renvoyant les échos.

9. Le drone de la revendication 6 ou 7, comprenant en outre des moyens pour calculer une valeur de décalage d'altitude (OFFSET) au moment où les moyens de réjection rejettent les valeurs de distance estimées, et pour ajouter cette valeur de décalage à la valeur de distance estimée lorsque les moyens de réjection ne rejettent plus les valeurs de distance estimées.

10. Le drone de la revendication 1, dans lequel les moyens de détection d'obstacle comprennent des moyens pour détecter, dans les valeurs de distance obtenues pour une succession temporelle d'impulsions émises par le capteur télémétrique, deux sauts consécutifs de signe opposé avec des valeurs de distance obtenues semblables avant et après ces deux sauts.

11. Le drone de la revendication 10, comprenant en outre des moyens pour calculer une valeur de décalage d'altitude (OFFSET) au moment du premier saut, et pour ajouter cette valeur de décalage à la valeur de distance estimée au moment du second saut.

12. Le drone de la revendication 1, dans lequel les moyens de détection d'obstacle comprennent des moyens pour détecter une oscillation, entre deux valeurs, des valeurs de distance obtenues pour une succession temporelle d'impulsions émises par le capteur télémétrique lorsque le drone est dans un état de point fixe.

13. Le drone de la revendication 12, dans lequel les moyens de détection d'obstacle comprennent des moyens pour lisser les valeurs de distance successivement obtenues en présence d'une oscillation détectée.

14. Le drone de la revendication 1, dans lequel les moyens de détection d'obstacle comprennent des moyens aptes à détecter une perte du signal délivré par le capteur télémétrique du fait d'une absence d'écho renvoyé, à calculer une valeur de décalage d'altitude (OFFSET) au moment de cette perte de signal, et à appliquer cette valeur de décalage comme signal télémétrique en entrée de l'estimateur.

15. Le drone de la revendication 14, dans lequel, en cas de perte de signal télémétrique : i) si l'altitude du drone est inférieure à une altitude de seuil donnée, la valeur de décalage enregistrée est appliquée en entrée de l'estimateur si cette valeur enregistrée est présente, une valeur prédéterminée étant appliquée dans le cas contraire, et ii) si l'altitude du drone est supérieure à ladite altitude de seuil donnée, la valeur de décalage enregistrée est appliquée inchangée en entrée de l'estimateur.

## Patentansprüche

1. Drehflügeldrohne (10) mit mehreren Rotoren (12), die durch jeweilige Motoren (110) angetrieben werden, die durch Anwendung von differenzierten Antriebsbefehlen (158) gesteuert werden, um die Drohne hinsichtlich Verhalten und Geschwindigkeit zu steuern,
wobei diese Drohne Mittel zur Höhenbestimmung (134) umfasst, die geeignet sind, einen absoluten Höhenwert der Drohne, ausgedrückt in einem absoluten terrestrischen Bezugspunkt, zu liefern, umfassend:
- einen telemetrischen Sensor (154), der geeignet ist, eine relative Distanz zwischen der Drohne und einer Fläche (18), die von der Drohne entsandte Ultraschallimpulsechos zurücksendet, zu beurteilen,
**dadurch gekennzeichnet, dass** die Höhenbestimmungsmittel (134) ferner umfassen:
- einen Barometersensor (156), der geeignet ist, ein Signal über die Höhenveränderung der Drohne zu liefern;
- ein Prognosemittel (152), das am Eingang die von dem telemetrischen Sensor und dem Barometersensor entsandten Signale empfängt und diese Signale kombiniert, um am Ausgang den absoluten Höhenwert der Drohne zu liefern;
- Mittel zur Validierung des von dem telemetrischen Sensor gelieferten Signals, die geeignet sind, die zurückgesandten Echos zu analysieren und in Abhängigkeit von dem Resultat dieser Analyse in der Folge die Parameter des Prognosemittels zu verändern und/oder das Anlegen des von dem telemetrischen Sensor gelieferten Signals an das Prognosemittel zu gestatten oder zu untersagen; und
- Mittel zur Erfassung eines Hindernisses, die geeignet sind, die zurückgesandten Echos zu analysieren und in Abhängigkeit von dem Resultat dieser Analyse das Vorhandensein und die Konfiguration eines Hindernisses in dem Aktionsradius des telemetrischen Sensors abzuleiten und an dem Prognosemittel eine Korrektur vorzunehmen, die geeignet ist, die Auswirkung des Hindernisses auf die von dem telemetrischen Sensor geschätzte relative Distanz auszugleichen.

2. Drohne nach Anspruch 1, bei der das Prognosemittel einen prädiktiven Filter (152) umfasst, der eine Darstellung eines dynamischen Modells der Drohne einschließt, wobei dieser Filter geeignet ist, eine Vorhersage des absoluten Höhenwerts der Drohne aus den Antriebsbefehlen (158) zu machen und diese Vorhersage periodisch in Abhängigkeit von den vom telemetrischen Sensor (154) und vom Barometersensor (156) gelieferten Signalen neu anzupassen.

3. Drohne nach Anspruch 2, bei der der prädiktive Filter ein Filter mit vier Zuständen ist, umfassend: den absoluten Höhenwert, gezählt in Bezug auf eine Startposition der Drohne; eine vertikale Geschwindigkeitskomponente der Drohne; eine Verzerrung der Antriebsbefehle in Bezug auf das dynamische Modell der Drohne; und eine Verzerrung des Barometersensors.

4. Drohne nach Anspruch 1, bei der die Validierungsmittel Mittel zur Bewertung der Qualität der die Echos zurücksendenden Fläche in Abhängigkeit von der Anzahl von gleichzeitig für einen selben entsandten Impuls empfangenen Echos umfassen.

5. Drohne nach Anspruch 1, bei der die Validierungsmittel Mittel zur Bewertung der Qualität der die Echos zurücksenden Fläche in Abhängigkeit von der Dispersion zwischen den erhaltenen Distanzwerten für eine zeitliche Aufeinanderfolge von von dem telemetrischen Sensor entsandten Impulsen umfasst.

6. Drohne nach Anspruch 1, bei der die Validierungsmittel Mittel zum Zurücksenden der vom telemetrischen Sensor geschätzten Distanzwerte in Abhängigkeit von einer Kohärenzanalyse einer Vielzahl von erhaltenen Distanzwerten für eine zeitliche Aufeinanderfolge von von dem telemetrischen Sensor entsandten Impulsen umfasst.

7. Drohne nach Anspruch 1, bei der die Validierungsmittel Mittel zum Zurücksenden der vom telemetrischen Sensor geschätzten Distanzwerte in Abhängigkeit von der Abweichung eines laufenden Distanzwerts in Bezug zur einer Distanzvorhersage, die von einer Vielzahl von Distanzwerten für eine zeitliche Aufeinanderfolge von von dem telemetrischen Sensor entsandten Impulse erhalten wird, umfasst.

8. Drohne nach Anspruch 6 oder 7, bei der die Rücksendemittel im Vergleich mit variablen Schwellenwerten, die von einer Qualitätsbewertung der die Echos zurücksendenden Fläche abhängen, wirken.

9. Drohne nach Anspruch 6 oder 7, ferner umfassend Mittel zur Berechnung eines Höhenabweichungswerts (OFFSET) zu dem Zeitpunkt, zu dem die Rücksendemittel die geschätzten Distanzwerte zurückweisen, und zur Hinzufügung dieses Abweichungswerts zu dem geschätzten Distanzwert, wenn die Rücksendemittel die geschätzten Distanzwerte nicht mehr zurückweisen.

10. Drohne nach Anspruch 1, bei der die Mittel zur Erfassung eines Hindernisses Mittel umfassen, um in den erhaltenen Distanzwerten für eine zeitliche Aufeinanderfolge von vom telemetrischen Sensor entsandten Impulsen zwei aufeinanderfolgende Sprünge mit umgekehrtem Vorzeichen mit ähnlichen erhaltenen Distanzwerten vor und nach diesen beiden Sprüngen zu erfassen.

11. Drohne nach Anspruch 10, ferner umfassend Mittel zur Berechnung eines Höhenabweichungswerts (OFFSET) zum Zeitpunkt des ersten Sprunges und zur Hinzufügung dieses Abweichungswerts zu dem zum Zeitpunkt des zweiten Sprunges geschätzten Distanzwert.

12. Drohne nach Anspruch 1, bei der die Mittel zur Erfassung eines Hindernisses Mittel umfassen, um zwischen zwei Werten eine Schwingung der erhaltenen Distanzwerte für eine zeitliche Aufeinanderfolge von vom telemetrischen Sensor entsandten Impulsen zu erfassen, wenn sich die Drohne in einem Fixpunktzustand befindet.

13. Drohne nach Anspruch 12, bei der die Mittel zur Erfassung eines Hindernisses Mittel umfassen, um die Distanzwerte, die aufeinanderfolgend bei Vorhandensein einer erfassten Schwingung erhalten werden, zu glätten.

14. Drohne nach Anspruch 1, bei der die Mittel zur Erfassung eines Hindernisses Mittel umfassen, die geeignet sind, einen Verlust des vom telemetrischen Sensor gelieferten Signals auf Grund des Fehlens eines zurückgesandten Echos zu erfassen und einen Höhenabweichungswert (OFFSET) zum Zeitpunkt dieses Signalverlusts zu berechnen und diesen Abweichungswert als telemetrisches Signal am Eingang des Prognosemittels anzulegen.

15. Drohne nach Anspruch 14, bei der im Falle eines Verlusts des telemetrischen Signals: i) wenn die Höhe der Drohne geringer als eine gegebene Schwellenhöhe ist, der aufgezeichnete Abweichungswert an den Eingang des Prognosemittels angelegt wird, wenn dieser aufgezeichnete Wert vorhanden ist, wobei ein vorbestimmter Wert im umgekehrten Fall angelegt wird, und ii) wenn die Höhe der Drohne größer als die gegebene Schwellenhöhe ist, der aufgezeichnete Abweichungswert unverändert an den Eingang des Prognosemittels angelegt wird.

## Claims

1. A rotary-wing drone (10) with multiple rotors (12) driven by respective motors (110) controlled by application of differentiated motor commandes (158) to pilot the drone in attitude and speed,
said drone including altitude determination means (134) adapted to deliver an absolute drone altitude value expressed in an absolute terrestrial coordinate system, comprising:
- a telemetric sensor (154), adapted to estimate a relative distance separating the drone from a surface (18) returning echoes of ultrasonic pulses emitted by the drone,
**characterized in that** the altitude determination means (134) further comprise:
- a barometric sensor (156), adapted to deliver a drone altitude variation signal;
- an estimator (152), receiving as inputs the signals delivered by the telemetric sensor and the barometric sensor and combining these signals to deliver as an output said absolute drone altitude value;
- means for validating the signal delivered by the telemetric sensor, adapted to analyse the returned echoes and, based on the result of this analysis, to accordingly modify the parameters of the estimator and/or to allow or inhibit the application to the estimator of the signal delivered by the telemetric sensor ; and
- obstacle detection means, adapted to analyse the returned echoes and, based on the result of this analysis, to deduce the presence and the configuration of an obstacle in the operating range of the telemetric sensor and to apply to the estimator a corrective action adapted to compensate for the effect of the obstacle on the relative distance estimated by the telemetric sensor.

2. The drone of claim 1, wherein the estimator comprises a predictive filter (152) incorporating a representation of a dynamic model of the drone, this filter being adapted to perform a prediction of said absolute drone altitude value based on said motor commands (158) and to periodically readjust this prediction as a function of the signals delivered by the telemetric sensor (154) and the barometric sensor (156).

3. The drone of claim 2, wherein the predictive filter is a four-state filter, comprising : said absolute altitude value, counted relative to a lift-off position of the drone; a drone vertical speed component; a bias of said motor commands with respect to said dynamic model of the drone; and a bias of the barometric sensor.

4. The drone of claim 1, wherein the validation means comprise means for estimating the quality of said surface returning the echoes, based on the number of echoes concurrently received for a same emitted pulse.

5. The drone of claim 1, wherein the validation means comprise means for estimating the quality of said surface returning the echoes, based on the dispersion between the distance values obtained for a time succession pulses emitted by the telemetric sensor.

6. The drone of claim 1, wherein the validation means comprise means for rejecting the distance values estimated by the telemetric sensor, based on an analysis of coherence of a plurality of distance values obtained for a time succession of pulses emitted by the telemetric sensor.

7. The drone of claim 1, wherein the validation means comprise means for rejecting the distance values estimated by the telemetric sensor, based on the deviation of a current distance value with respect to a prediction of distance obtained based on a plurality of distance values obtained for a time succession of pulses emitted by the telemetric sensor.

8. The drone of claim 6 or 7, wherein said rejection means operate relative to variable thresholds, which are functions of an estimation of quality of the surface returning the echoes.

9. The drone of claim 6 or 7, further comprising means for calculating an altitude offset (OFFSET) value at the time when the rejection means reject the estimated distance values, and adding this offset value to the estimated distance value when the rejection means no longer reject the estimated distance values.

10. The drone of claim 1, wherein the obstacle detection means comprise means for detecting, in the distance values obtained for a time succession of pulses emitted by the telemetric sensor, two consecutive jumps of opposite sign with similar obtained distance values before and after these jumps.

11. The drone of claim 10, further comprising means for calculating an altitude offset (OFFSET) value at the time of the first jump, and adding this offset value to the estimated distance value at the time of the second jump.

12. The drone of claim 1, wherein the obstacle detection means comprise means for detecting an oscillation, between two values, of the distance values obtained for a time succession of pulses emitted by the telemetric sensor when the drone is in a fixed-point state.

13. The drone of claim 12, wherein the obstacle detection means comprise means for smoothing the distance values successively obtained in the presence of a detected oscillation.

14. The drone of claim 1, wherein the obstacle detection means comprise means adapted to detect a loss of the signal delivered by the telemetric sensor due to the absence of returned echo, to calculate an altitude offset (OFFSET) value at the time of this signal loss, and to apply this offset value as a telemetric signal at the input of the estimator.

15. The drone of claim 14, wherein, in case of telemetric signal loss: i) if the altitude of the drone is lower than a given threshold altitude, the recorded offset value is applied at the input of the estimator if this recorded value is present, a predetermined value being applied in the opposite case, and ii) if the altitude of the drone is higher than said given threshold altitude, the recorded offset value is applied as such at the input of the estimator.
